## Europäisches Patentamt
## European Patent Office
## Office européen des brevets

(11) Publication number: **0 033 174**
**A1**

(12) # EUROPEAN PATENT APPLICATION

(21) Application number: **81200073.5**

(22) Date of filing: **22.01.81**

(51) Int. Cl.³: **F 24 J 3/02**

(30) Priority: **25.01.80 NL 8000470**

(43) Date of publication of application:
**05.08.81 Bulletin 81/31**

(84) Designated Contracting States:
**AT BE CH DE FR GB IT LI LU NL SE**

(71) Applicant: **Akzo N.V.**
**Ijssellaan 82**
**NL-6826 DW Arnhem(NL)**

(72) Inventor: **Duncker, Michiel Johannes**
**Mesdaglaan 81**
**NL-6813 GM Arnhem(NL)**

(72) Inventor: **van Valkenhoef, Joannes**
**Wolfkuilseweg 225**
**NL-6542 JJ Nijmegen(NL)**

(72) Inventor: **Zuuring, Pieter Hendrik**
**Tolhuis 20-28**
**NL-6537 LW Nijmegen(NL)**

(74) Representative: **Sieders, René et al,**
**P.O. Box 314**
**NL-6800 AH Arnhem(NL)**

(54) **Solar collector provided with a liquid-absorbing layer.**

(57) Solar collector comprising a closed housing (1,2), a collector thermally connected to the housing for converting solar rays into heat, a working fluid, an evaporation space (3) within the housing, a condensation space (4) within the housing, an internal connection between said spaces, and a heat exchanger. In order to obtain a uniform distribution of working fluid over the internal surface of the housing, it is covered over at least part of its evaporation space with an optionally profiled material which contains hollow spaces capable of receiving condensed working fluid, said spaces being provided throughout the covering material and mainly disposed in spaced relationship. Preferably the covering material is thermally conductive.

fig.1

EP 0 033 174 A1

Solar collector provided with a liquid-absorbing layer.

The invention relates to a solar collector comprising a closed casing from which non-condensable gases are at least substantially removed, a collector thermally connected to the casing and serving to convert solar rays into heat, a working medium contained in the casing, which working medium, in operation of the collector, is partly in the liquid and partly in the vapour state, an evaporating region in the casing, in which region the liquid working medium can evaporate under the influence of the heat emitted by the collector, a condensation region in the casing, in which region the vaporous working medium can condense, a passage connecting the evaporating region and the condensation region permitting the internal return of condensed working medium to the evaporating region, and a heat exchanger which is in thermal contact with the condensation region for the discharge of heat of condensation. By the above passage: "from which non-condensable gases are at least substantially removed" is meant that from the casing all gases are removed that do not positively contribute to the functioning of the solar collector. As a rule, the gas here will be air. A solar collector of this kind is known from U.S. Patent Specification No. 4 038 966. The solar collector described in it consists of a thin evacuated tank whose sun-facing wall serves as collector. In its operating position the tank is mounted at an angle to the horizontal in order to collect maximum solar radiation. In the lower portion of the tank is an amount of liquid which will evaporate upon solar rays striking the upper surface of the tank. The working medium rises to the relatively cool upper portion of the tank where it will condense and transfer its heat at a point where it is in thermal contact with an external condenser through which there is a flow of a heat conveying medium. Under the influence of gravity the condensed working medium flows back along the lower interior surface of the tank opposite the collector wall. This back wall is provided with various raised, curved ridges. The object of the ridges is to distribute the condensate over the lower interior surface so that it can be easily and quickly vaporized.

In that way, however, apart from the special mechanical operation required in providing these ridges, only a rough approximation is obtained of a uniform distribution of the working fluid over the interior surface of the tank wall. Various methods are known for bringing the working fluid into contact with a largest possible heating surface. With the solar collector according to Netherlands Patent Application No. 7 600 533 the working fluid is contained in a number of tubes which are in thermal contact with a collector. Viewed in cross-section the tubes are entirely filled with working liquid over a large part of their length. With the flat, box-shaped solar collector according to Netherlands Patent Application 7 707 586 the working fluid fills practically the entire evaporating region. With the two known solar collectors an unduly large amount of working fluid must be heated in proportion to the collector surface area. It is also known to spread the working fluid over the collector surface with the aid of a wick. By a wick is to be understood here a layer of absorbent material; at least partly by the capillary action of it the working fluid is spread through the layer. A solar collector of this kind is known from, for instance, the paper "The heat pipe fin, a novel design of a planar collector", 1975 International Solar Energy Congress and Exposition, July 28 - August 1, 1975, Los Angeles, Calif., U.S.A.. The wick proposed for use in a solar collector may be of various forms and materials, such as a fine wire mesh, a sintered layer, a layer formed by vapour deposition, a grooved surface, a layer of metal or ceramic fibres, a layer of metal foam (see Dunn and Reay, Heat Pipes, 1976, p.142 ff).

A wick is capable of spreading the working liquid also against gravity as a result of the capillary rise in fine channels. In a fibrous wick the capillary channels may be formed by the inside of the fibres if they are hollow, or by the space between the fibres. In order that a wick may contribute to evaporation over a large surface area the working liquid will have to be transported sideways through the wick so that it may reach the wick surface. This requirement has a limiting effect on the attainable length of the capillary channels and hence on the capillary rise attainable by the wick.

In the case of heat pipes, where the heat is furnished generally by a relatively short section of the heat pipe, there is no absolute need for a high capillary rise. If, however, the supply of heat is to take place over a relatively large surface area, as is the case with a solar collector, then the limited capillary rise of the wick forms a drawback. For, after a relatively long sunless period the wick will be wetted only over the part corresponding to the capillary rise. So in a subsequent sunny period the wick must first be entirely re-wetted, which will take quite some time. In the meantime there will be an additional loss of heat in that the non-wetted part of the wick is at a higher temperature, which leads to higher radiation, convection and conduction losses and hence to reduced thermal efficiency.

For the solar collector to display optimum efficiency it is of importance that evaporation should take place with the difference in temperature between the casing and the working liquid being restricted to a minimum. Considering that an increase in the difference in temperature is attended successively with surface evaporation, nuclear boiling, and finally film boiling, the aim should be merely to obtain surface evaporation. By surface evaporation is to be understood the evaporation of the liquid at the surface of the liquid; by boiling is meant evaporation with formation in the working liquid of vapour bubbles, which rise to the liquid surface; by film boiling is to be understood evaporation with vapour bubbles forming a vapour film on the interior surface of the casing. In the case of the above-discussed known solar collectors, where the working liquid practically entirely fills the evaporating region and the area of the surface of the working liquid in proporation to the volume of the working liquid is relatively small, evaporation will generally take place with boiling.

The solar collector according to the invention operates within the range of surface evaporation. It is characterized in that the interior surface of the casing is at least partially provided with a layer containing distributed voids that are disposed in generally spaced relationship and serve to receive the condensed working medium. This layer may be very thin. In the case of a collector surface area of, say, 1 $m^2$ and a sufficient number of liquid-receiving voids the layer need have a thickness of only a few hundred microns for the solar collector to function properly. In contrast to the situation with the known wicks there will be no or only very little capillary transport of the working liquid through this layer. On the whole it may be stated that working liquid which flows into some void or is formed in it as a result of condensation will remain stored in it until it evaporates again. In sunless periods wetting is consequently not limited to a section corresponding to the capillary rise, but the whole surface of the layer functions as a means of storing the working liquid. As a result, the solar collector will readily start working and consequently it will very soon have attained its maximum efficiency. A further advantage is that the height of the layer, and hence of the solar collector does not have any effect on its operation.

The layer may for instance contain glass powder, but preference is given to a layer of a satisfactory thermally conductive material, e.g., carbon powder, mica powder or metal powder. Very suitable is a layer containing a metallic powder and a binder. A conceivable metal powder is a powder of one or more metals or alloys. Suitable materials for composing the layer are aluminium powder and iron powder.

A suitable binding material is epoxy resin. Also conceivable materials, however, are polyimide resins and polyester resins and metal glues based on acrylate.

The starting material and the method of preparing the layer should be so chosen that in the layer voids are formed of which at least a sufficiently great number communicate with the evaporating region and whose dimensions and position permit receiving and retaining the chosen working liquid against gravity. Although the voids may to some extent communicate with each other, permitting the transport of liquid between the voids, care should be taken that the layer will not mainly act as a wick. The most favourable results are obtained with a layer which absorbs the working liquid at least mainly at the point where it is introduced (local absorption). Spreading of the working liquid throughout the layer at the same rate as in the case of the wick is not quite desirable in that the layer will then unfavourably compare with the action of a wick. At a much lower spreading rate than in the case of the wick, however, the layer retains its advantage over the wick. For the formation of voids it may under some circumstances be desirable that to the binder there should be added an expanding agent. After the layer has been applied to the substrate, the expanding agent escapes while in the gaseous state, resulting in the formation of a foamed layer containing voids. Whereas in this case the voids are formed from within the layer, they can also be introduced into it from an outside source. In that case it may be conceivable to pass a gas through the freshly applied layer. Alternatively, a crushed foam might be pressed into the binder/metal powder layer. The voids in the layer are formed then by existing voids in the crushed foam. In another embodiment of the solar collector according to the invention the layer has voids that were formed mechanically. They may be obtained then by subjecting the layer to a locally applied pressure, for instance with the aid of gas jets or liquid jets or jets of solid particles. The direction in which the pressure is applied may be such that also with the layer taking up an oblique position the force of gravity will contribute to keeping the condensate within the voids.

A very suitable embodiment consists in that the voids in the layer are formed by needle punching.

According to a different method the layer is applied by flame-spraying. Further it is of advantage that viewed in return flow direction of the condensed working medium the layer increases in thickness, whether stepwise or gradual. In the lower half of the layer a little more liquid can then be stored than in the upper half. As a result, the solar collector will be more prompt in resuming its operation after a sunless period.

It may moreover be of advantage for the layer to consist of strips extending transverse to the return flow direction of the condensed working medium. At their lowermost sides these strips might still be provided with a rim to stop the condensed working medium from flowing down to lower-positioned strips. In some cases it may be desirable for the layer to be profiled.

Further, the liquid spreading absorbing means may partly consist of a wick and partly of a porous layer, both being of the type discussed above. For instance, the wick may form the lower part and the porous layer the upper part, as viewed in the operating position of the solar collector.

In the following examples various methods are described by which the "porous" layer may be obtained.

Example I

To an aluminium powder of the type LNR101 of the firm of Hoechst and consisting of 50% by weight of particles of 0-50 μm and 50% by weight of particles of 50-100 μm water was added until the paste had acquired sufficient spreading consistency. To this paste there was added, with vigorous stirring, an epoxy resin (of the type Araldit AW 139) and a curing agent (of the type HV 998), both agents being marketed by Ciba- Geigy. Subsequently, the resulting product was evenly spread on a sheet steel substrate with the aid of a knife coater. Then the layer thus ob- tained was dried for 1 hour at a temperature of 50°C and finally heated to 90°C for the epoxy resin to cure.

The resulting porous layer contained distributed voids which were in open communication with the ambient but allowed of no or little interchange of working liquid, viz. hexane. Of a layer having a thickness of about 800 microns the absorption capacity was about 300 grammes of hexane per $m^2$.

Example II

The procedure used in this example was the same as that used in the preceding example, except that use was made of glass powder having an average particle size of about 40 microns.
The resulting layer again contained voids for the working liquid that were generally separated from each other. As was to be expected the thermal conductivity of the layer was inferior to that of the layer obtained in Example I, so that in that respect it was less suitable for use in solar collectors.
Of a layer having a thickness of about 600 microns, the absorption capacity was about 180 grammes of hexane per $m^2$.

Example III

In the procedure used in this example the porous layer was applied by flame-spraying. The layer was applied to one side of the steel plate. First the plate was blasted with coarse electrocorundum (Abrasief M) to roughen its surface. Subsequently, a sub-layer of nickel aluminide (Metco 405 of the firm of Metco) was applied by flame-spraying, followed by applying to it a top layer of a steel alloy (Metcoloy No. 2), which was also done by flame-spraying. Both the substance of the sublayer, which served as adhesive layer, and that of the top layer were obtained by atomizing a wire of the respective material in an oxygenacetylene flame. The material was applied to the plate by means of compressed air. The resulting final layer had a thickness of about 350 microns and its absorption capacity was 35 to 40 grammes of hexane per $m^2$.

Example IV

In the procedure used in this example, the porous layer was applied by arc metal spraying. The layer was applied to one side of the steel plate. First the plate was blasted with coarse electrorundum to roughen its surface. Subsequently, an adhesive layer was applied by spraying Metcoloy 2 (marketed by the firm of Metco) at a distance from the plate surface of abt. 25 cm, followed by spraying the same material at a distance from it of 50 cm. The substance of the layer in this spraying technique is atomized in an electric arc and is applied to the plate by compressed air. The resulting layer had a thickness of about 0.3 - 0.4 mm.

Example V

100 parts of epoxy resin (Araldit 134B), 40 parts of curing agent (H 4994), both marketed by Ciba-Geigy, and 140 parts of aluminium powder of the same type as used in Example I were properly mixed. To the resulting mixture there were added 14 parts of fine powdered $(NH_4)_2CO3$ as expanding agent, after which the mixture was formed into a homogeneous paste, with vigorous stirring. Subsequently, the paste was evenly spread over a substrate of plate steel. The substrate thus treated was heated for 10 minutes at 80°C, after which heating was continued for 60 minutes at 100°C. The resulting expanded porous layer satisfactorily adheres to the plate steel and displays distributed voids that communicate with the ambient. Of a layer having a thickness of about 0,5 mm the absorption capacity is 25 to 50 grammes of octane per $m^2$.

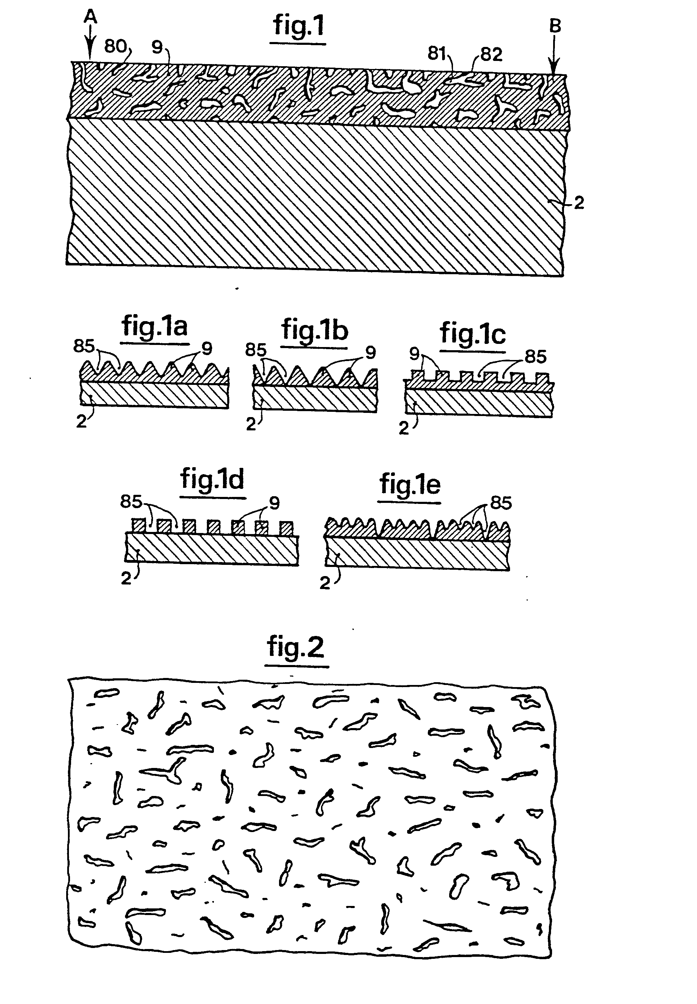

Figures 1 and 2 are schematic views of the layer.

Figure 1 shows the layer in a sectional view transverse to the layer. Figure 2 is a sectional view of the layer along a plane parallel to the layer. The layer, which is referred to by the numeral 9, has been applied to the steel plate 2 in accordance with the procedure of Example I. Voids which receive the working liquid are referred to by the numerals 80 and 81. Voids like 80 are in direct communication with the surface of the layer 9. Other voids, such as 81, communicate with the surface of the layer 9 via one or more other voids 82. Although voids do communicate with each other, a number of interconnecting voids form larger voids rather than an entire network of communicating voids. So when working liquid is introduced into a horizontally positioned layer at a point A, it will not spread to points like B, from which the distance to A is many times greater than the average dimensions of the voids.

Under some circumstances it may be desirable for the surface area of the layer 9 to be enlarged by profiling. Such a provision may contribute on the one hand to several voids being in open communication with the evaporating region and on the other may reduce the distance to be covered by the vapour as it passes from the voids in which it is formed to the evaporating region, as a result of which the temperature gradient perpendicular to the layer will be smaller. Figures 1a through 1e are schematic illustrations of differently profiled layers. The layer is preferably so profiled that the grooves 85 extend transverse to the direction of flow of the condensate. The above examples merely provide a few alternative methods of obtaining a layer having the desired properties. Not only may the layer contain other metals and binders than given in the examples, but it is also possible to make special provisions for promoting the formation of voids which are not or hardly in communication with each other but which do take up the working liquid. In this connection mention is made of the use of expanding agents in methods of the types described in the Examples I and II. It is of importance then for the expansion to continue as long as is necessary for the formation of voids.

The drawing illustrates a solar collector in which very successful use has been made of the layer according to the invention.

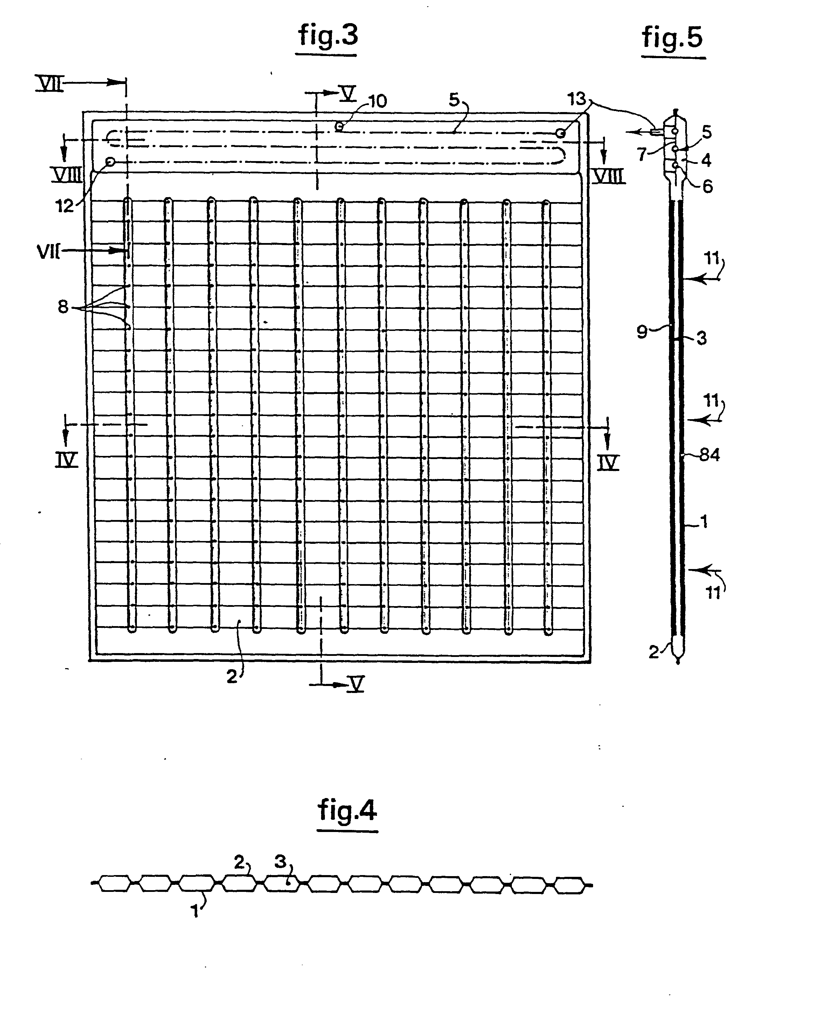

In it Figure 3 is a diagrammatic view of a solar collector according to the invention;

Figures 4 and 5 are sectional views along the lines IV-IV and V-V, respectively, in Figure 3;

Figure 6 is the condensation region of a solar collector according to the invention in a sectional view corresponding to Figure 5;

Figure 7 is a sectional view along the line VII-VII in Figure 3;

Figure 8 is a sectional view along the line VIII-VIII in Figure 3;

Figure 9 is a detail view of another construction of the solar collector according to Figures 6, 7 and 8; and

Figures 10 through 19 show the condenser of a solar collector according to the invention used in the constructions according to the Figures 6, 7 and 8.

Figure 20 is a sectional view of a solar collector containing a condenser.

Figures 21 through 24 relate to a measuring arrangement for testing a solar collector according to the invention.

Figures 3, 4 and 5 are schematic views of the solar collector according to the invention. Figure 3 is a plan view of the solar collector. Figure 4 is a sectional view of it along the line IV-IV, and Figure 5 is a sectional view along the line V-V in Figure 3.

The solar collector comprises a casing of substantially rectangular cross-section formed by two steel plates 1,2. As is shown in Figure 4, the plates are so shaped that they enclose hexagonal channels 3. The channels 3 form an evaporating region which opens into a condensation region 4. These channels may, of course, have a different cross-sectional shape. For instance, they may be round, which is of advantage from the point of view of pressure resistance.

As apparent in Figure 5, the two plates 1,2 are a little further apart at their upper ends, permitting the condensation region to accomodate a heat exchanger 5 provided with a cooling spiral 6 and a cooling plate 7.

The plates 1,2 are joined by lapwelding so that a sealed casing is formed permitting to maintain a pressure in it which is lower or higher than the ambient pressure. For the casing to have sufficient strength the plates 1,2 are welded to each other at several points 8. These joints also contribute to obtaining a good thermal contact between the two plates.

As is shown in Figure 5, both the front plate 1 and the back plate 2 are provided with a layer 9 and a layer 84, respectively, according to the invention. In the casing formed by the plates 1,2 is an appropriate working medium which upon heating evaporates and upon cooling emits the absorbed heat in the form of heat of condensation. To promote evaparation the non-condensable gases have been removed from the casing. To that end the solar collector is provided with an evacuation nipple 10, which is also used for filling the solar collector with working liquid.

The solar collector operates as follows. Its position is assumed to be such that solar radiation is incident approximately at right angles to it, as indicated in Figure 5 by the arrows 11. The sun rays heat the front plate 1 acting as collector, so that its temperature increases. Of the back plate 2 connected to the front plate 1 and in proper thermally conductive contact with it the temperature will also rise. The working liquid contained in the layer 9 on the wall of the channel 3 will evaporate then and the vapour will condense on the cooling plate 7 by which the releasing heat of condensation is given off to a heat transporting medium flowing through the cooling spiral 6. This medium is passed through the cooling spiral via the connections 12, 13 provided on the solar collector.

Under the influence of gravity the condensed working medium (the working liquid) flows back into the channels 3 and successively (in downward direction) fills the voids in the layer 9. The back plate 2, which has practically the same temperature as the front plate, causes the working liquid to evaporate, so that the above-described cycle is repeated.

In the absence of sunshine the solar collector will cool down. The temperature of the front plate 1 will then decrease to a value which is somewhat below that of the back plate 2 and the condensation region 4. As a result, the condensation of the gaseous medium will be displaced to the layer 84. If the capillary action of the voids that are in open communication with the evaporating region is sufficiently great, the condensate formed in the voids will be retained, even against gravity. In such a case the condensate formed at the surface of the layer will be caused to flow into the voids by capillary action.

In the absence of such capillary action the layer 84 will yet retain the condensate in voids which are so positioned that its outflow is prevented.

After the sun has come out again first the temperature of the front plate 1 will rise, as a result of which the working liquid contained in the layer 84 will evaporate. The working vapour rises and precipitates on the heat exchanger 5. Then the condensate spreads over the layer 9 on the back plate, as described hereinbefore.

The layer 84 on the front plate plays an important roll. In the absence thereof the condensate would, upon transition to a period without sunshine, flow down over the somewhat cooler front plate and collect on the bottom of the solar collector. In that case it will take considerably longer for the solar collector to reach its maximum efficiency after the sun has come out again. This delay is due to evaporation of the condensate contained in the lower part of the solar collector taking longer than evaporation of condensate which is evenly distributed over the front plate 1.

Instead of the condensation region being disposed over and in line with the evaporating region, which is advantageous from the point of view of construction, other arrangements may be used. Alternatively, the condensation region may be placed above and in a staggered position relative to the evaporating region, in accordance with the construction described in Netherlands Patent Application No. 7 802 076 laid open to public inspection. Although such a disposition of the condensation region results in a solar collector which perpendicular to the plane of the collector is of greater dimension than in the case where the condensation region is in line with the evaporating region, such an arrangement yet offers thermal advantages. For in that case the condenser can be more satisfactorily insulated from losses of heat.

Further, the lowermost part of the condenser need not necessarily be positioned higher than the evaporating region, although this is of advantage from the point of view of construction. It is also conceivable for the condensation region to be entirely or partially coextensive with the evaporating space, the condensate collecting in the lowermost part of the condensation region from which it is transported to a higher point in the evaporating region. In the case of a relatively small difference in height the condensate may be transported by a wick, there being no need then to use a pump. The wick then exclusively serves to convey the condensate from the condensation region to the evaporating region.

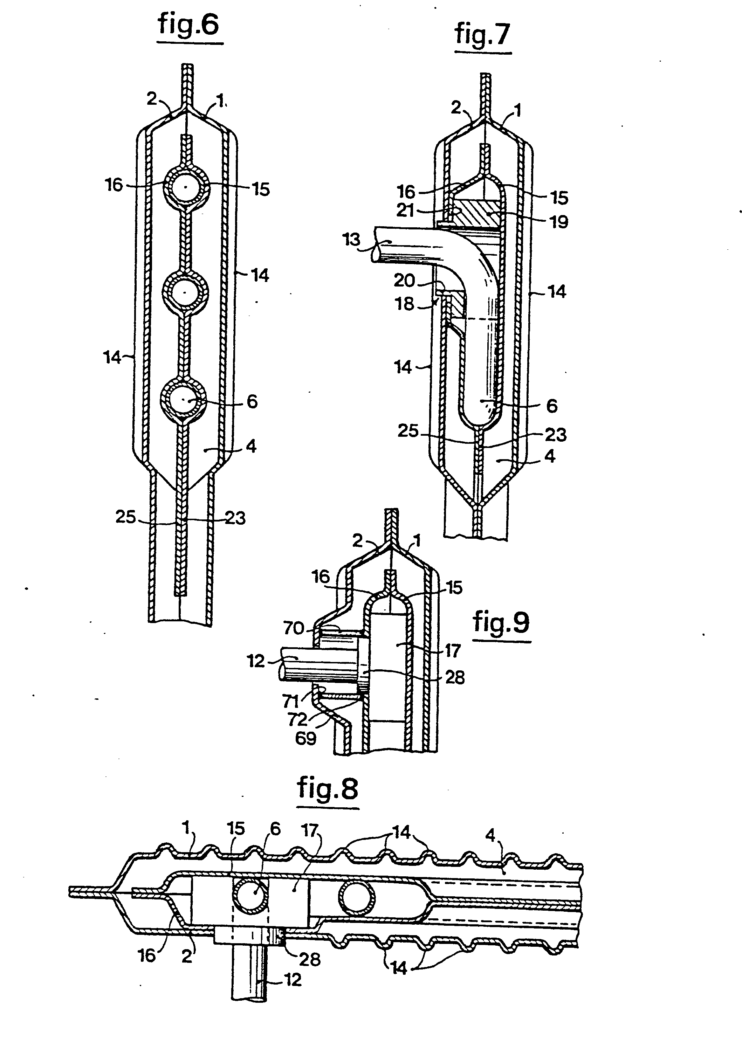

Figures 6, 7 and 8 show further details of the construction of the condensation region 4. Figure 6 shows the condensation region 4 in a sectional view corresponding to Figure 5; Figure 7 is a sectional view along the line VII - VII in Figure 3 and Figure 8 is a sectional view along the line VIII - VIII in Figure 3. At the condensation region 4 the construction is reinforced by providing the plates 1,2 with a wavy profile 14. For, at the condensation region the plates 1,2 cannot be attached to each other by welding.

As is apparent in the Figures 6, 7 and 8, the cooling spiral 6 is enclosed by two cooling plates 15, 26, which are of steel, as are the plates 1,2. The cooling plates 15, 16 are so welded to each other and to the casing that the space they enclose does not communicate with the inside of the solar collector. Figures 7 and 8 show how this enclosed space is sealed from the inside of the casing at the passages for the cooling spiral. For each end of the cooling spiral 6 the back plate 2 is provided with a round passage. The passage for the end 13 is indicated by the reference numeral 18. On this end 13 there is placed a supporting ring 19 whose narrow part 20 projects through the passage 18. One end face of the supporting ring 19 bears against the cooling plate 15, whereas the shoulder 21 of the supporting ring bears against the cooling plate 16.

The assembly comprising the cooling spiral 6, cooling plates 15, 16 and supporting rings 17, 19 is first placed on the back plate 2 with the two supporting rings projecting through the passages. Subsequently, while applying pressure to the cooling plate 15 at the supporting rings, the cooling plate 16 is welded to the back plate 2 by making an annular projection weld around the passages. Since both the cooling plate 16 and the back plate 2 are of the same material (steel), there will be no such sealing problems as may be met with known solar collectors comprising an internal cooling spiral of copper and with the remaining part of the solar collector being of steel.

The slight direct thermal contact between the condenser 15, 6, 16 and the casing 2, 3 contributes to the solar collector giving off little heat to the ambient atmosphere in periods without sunshine. The solar collector consequently functions as a thermal diode, which is of particular importance in overcast periods attended with a low outside temperature. The diode action can still be improved in the way indicated in Figure 9. It illustrates in detail a somewhat different way of attaching the condenser to the back plate 2. At its passage for the cooling spiral the back plate 2 is provided with a recessed part 69. Between the lower part of this recess and the cooling plate 16 is a metal sleeve 70. The latter is attached to the back plate 2 and the cooling plate 16 by projection welding in the above-described way. The welds are referred to by the numerals 71, 72. By using a stainless steel sleeve instead of a steel sleeve 70 the heat transition resistance between the cooling plate and the back plate 2 may be further increased.

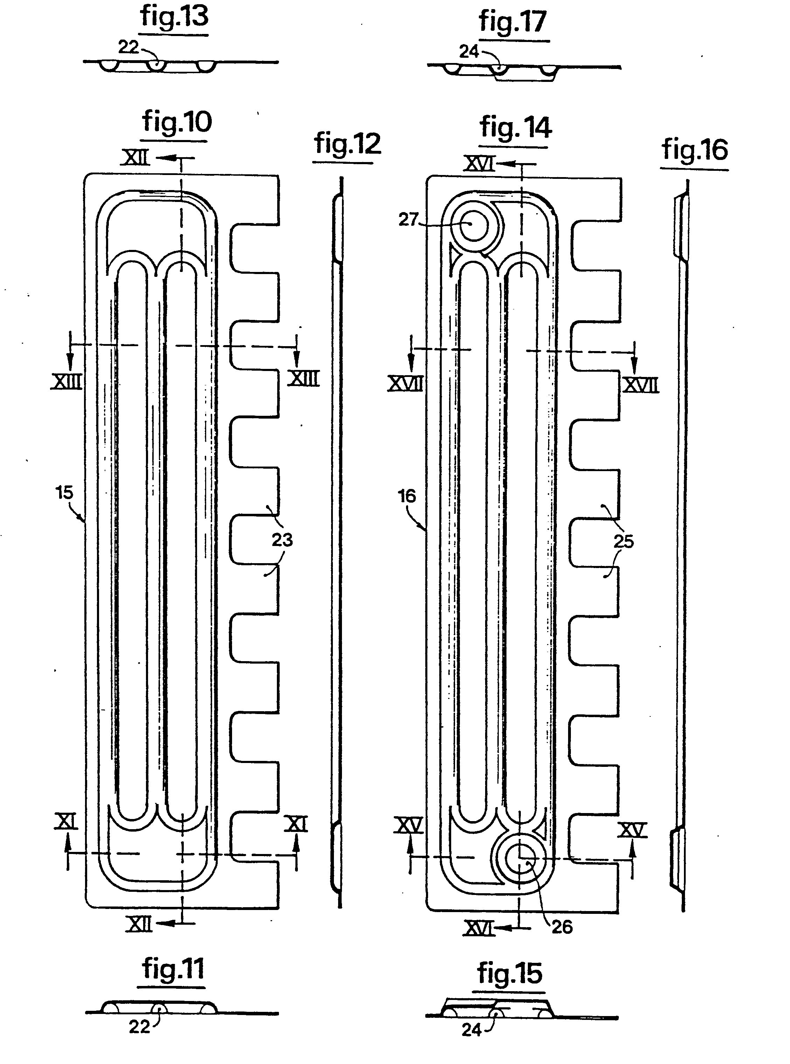

Figures 10 through 18 are detail views of the condensor 6, 15, 16 of the construction according to Figures 6, 7 and 8. Figures 10 through 13 show the cooling plate 15 and Figures 14 through 17 the cooling plate 16. Figure 10 shows the cooling plate 15 in an outside view of the condenser in the assembled state. As illustrated by the various sectional views given in Figures 11, 12 and 13, the cooling plate 15 has a particular profile which on the one hand serves to provide a space for the cooling spiral between the two cooling plates of the condenser and on the other to obtain a satisfactory heat transfer between the cooling plates and the cooling spiral. For this latter purpose the cooling plate 15 is provided with elongated recesses 22 which are so formed that the cooling spiral closely fits in them. On its underside the cooling plate 15 is provided with tooth-shaped projections 23. In the assembled state of the solar collector each of these projections is positioned over a channel 3 of the evaporating region. The projections 23 serve to guide the condensed working medium into the channels 3, also when the left-hand and the righthand end of the condenser are not disposed at quite the same level. Figure 14 is an elevational view of the other cooling plate 16. As the cooling plate 15, it is provided with elongated recesses (24) and tooth-shaped projections (25). Moreover, the cooling plate 16 is provided with passages 26, 27 for the ends of the cooling spiral. These passages register with the passages in the back plate 2.

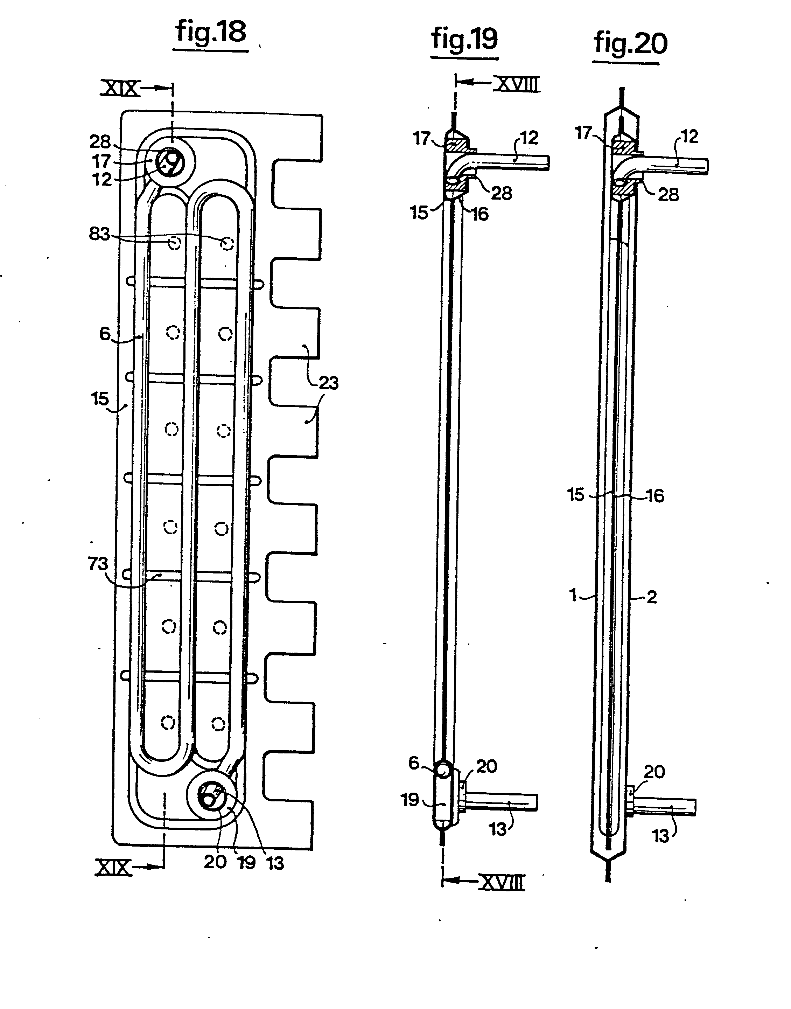

Figure 18 is an inside view of the cooling plate 15 of Figure 10, with inserted cooling spiral 6. Figure 18 also shows the supporting rings 17, 19 with their narrow parts 28 and 20, respectively, placed on the ends 12, 13 of the cooling spiral 6. When the cooling plate 16 according to Figure 14 is positioned against the cooling plate 15 according to Figure 18, then the ends 13, 12 of the cooling spiral 6 project through the passages 26 and 27, respectively, of the cooling plate 16. Figure 18 further shows that the cooling plate 15 is provided with ribs 73. They prevent the condensate from being unevenly distributed among the evaporating channels 3. The condensate formed between two neighbouring ribs is caused to flow via the tooth 23 positioned between these ribs.

Figure 19 is a sectional view of the condenser in this assembled state, along the line XIX-XIX in Fig. 18. Figure 18 in its turn is a sectional view along the line XVIII-XVIII in Figure 19.

To permit the discharge of condensate collecting on the outside of the elongated recesses 22, 24 of the cooling plates 15 and 16, respectively, the cooling plates may be provided locally with holes, which are schematically indicated in Figure 18 by the dotted circles 83. To prevent the inside of the solar collector from communicating with the ambient atmosphere via these holes, the edges of each pair of facing holes 83 are attached to each other by projection welding. Figure 20 is a sectional view of the solar collector comprising the condenser. The plane along which this section is drawn runs through the condensation region above the condenser. For simplicity, the front plate 1 and the back plate 2 are just drawn in their plain, non-profiled state. The solar collector according to the invention, of course, permits taking all known steps that are required in order to attain maximum effectiveness. For instance, the solar collector may be accomodated in a casing which is provided with a sunlight transmitting single or multiple cover, which may for instance be of glass or some plastics material and may further contain insulating material to prevent loss of heat. The collector preferably comprises a spectral-selective layer which combines a high absorption factor $\alpha$ for visible light with a low emission factor $\varepsilon$ for the infrared region.

To reduce loss of heat to a minimum it is recommended that at the condensation region 4(see Figures 5 through 9) the inside surfaces of the plates 1·and 2 should be provided with a reflecting layer. Such a layer may be obtained for instance by locally subjecting the inside surfaces of the plates 1 and 2 to a polishing treatment or providing these surfaces with a foil of metal, such as aluminium, having a high coefficient of reflection.

The favourable effect of the porous layer could be demonstrated experimentally when testing a solar collector as illustrated in the Figures 6 through 20. It was placed in an insulated casing which was sealed by a glass plate. The front plate 1 of the solar collector was facing the glass plate. The casing containing the solar collector was placed on a test bench with the glass plate facing an artificial sun consisting of a number of flood lights type par 38. Into the evaporating space 300 cc of hexane had been introduced after the inside of the solar collector had been evacuated to below 1 millibar. Both to the front plate 1 and the back plate 2 a porous layer had been applied by the method of Example I. On the outside wall of the back plate there were 9 thermocouples for measuring the temperatures at the various points. They were all connected to a recording device.

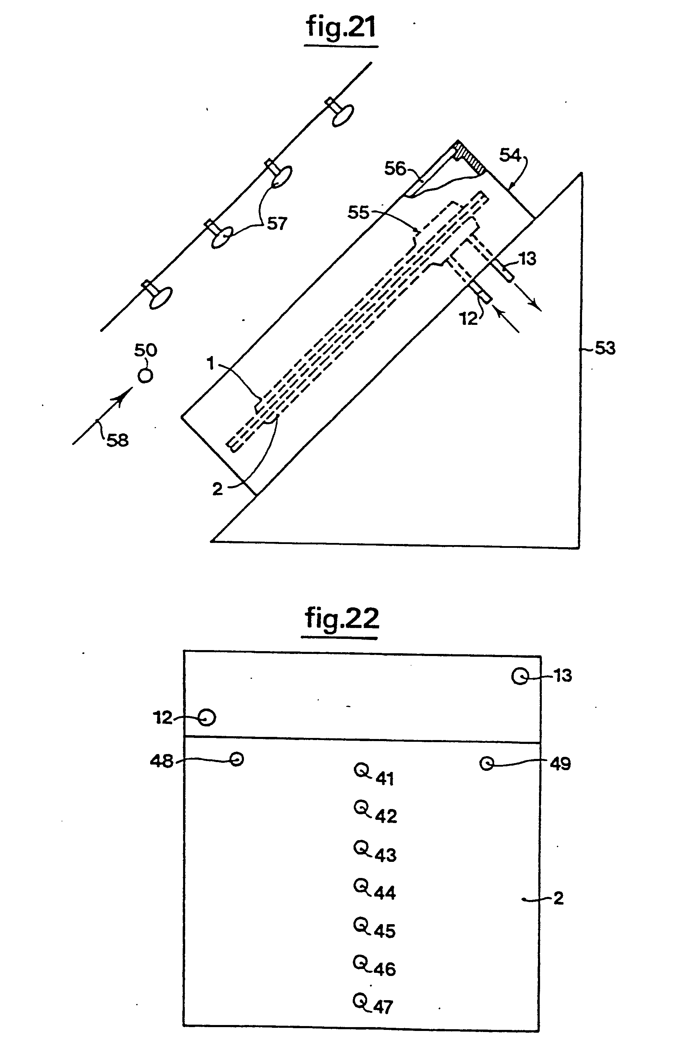

Figures 21 and 22 schematically show the set up of the test bench and the positions of the thermocouples. In Figure 1 the numeral 53 refers to a frame on which there is mounted an insulating casing 54 containing a solar collector 55 indicated by dash lines. The casing 54 is covered by a glass plate 56. Disposed at some distance from the glass plate 56 are flood lights 57 having a radiation power of

0033174

800 Watt per $m^2$. A fan (not shown in the drawing) provides an air flow in the direction indicated by the arrow 58 of 3 m/sec. between the lights 57 and the casing 54. Inside the air stream, but outside the radiation of the lights 57 a thermocouple is placed at a point 50 for measuring the ambient temperature. To the solar collector water of a constant temperature is fed at a rate of 1 litre per minute through the connection 12 of the cooling spiral. Positioned at the connections 12, 13 there are thermocouples for measuring the temperature of the water flowing into and out of the collector.

The back plate 2 of the solar collector is also provided in different places with thermocouples, as is further shown in Figure 22, which is a diagrammatic view of the back part of the solar collector comprising the back plate 2. In the middle of the back plate 2 there are provided a row of thermocouples 41 through 47 which are spaced at intervals of about 10 cm. They serve to measure the temperatures at various points on the back plate 2. On either side and at the same level of the thermocouple 41 there are mounted two thermocouples 48, 49.

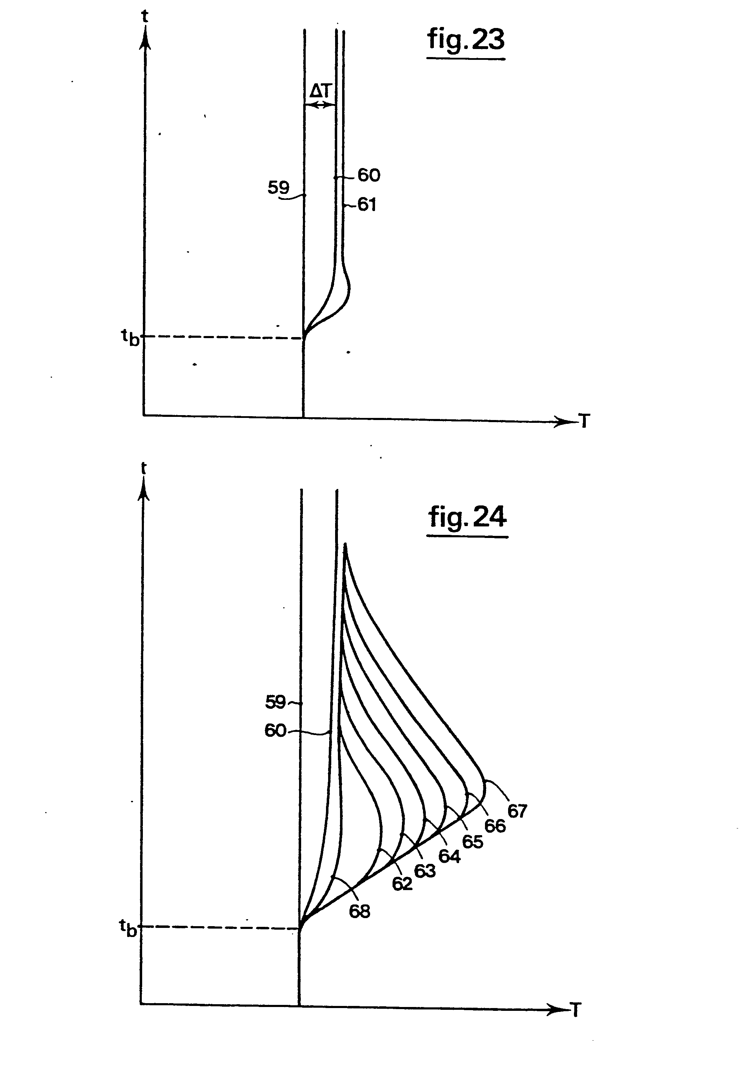

First of all, with the artificial sun being switched off, water was for some time passed through the cooling spiral. Then the lights 57 were switched on. Right from the start the temperatures measured by the thermocouples were registered. Figure 23 shows the resulting graphs. The temperature is plotted on the abscissa and the time on the ordinate. The vertical line 59 represents the constant temperature during the experiment of the water flowing into the collector. At the moment $t_b$ the lights 57 were switched on, which follows from the temperature line 60 which illustrates the variation in temperature of the outflowing water. The temperature lines for the thermocouples 41 through 47 practically coincide, as is illustrated in Figure 23 by the single line 61. First the temperatures fairly soon reached a maximum value and after a short time decreased to an end value which is 1 to 2°C higher than the temperature of the outflowing water. The temperature difference $\Delta T$ (see Fig. 23) between the inflowing and the outflowing water is a measure of the power emitted to the water.

When the experiment was repeated under the same conditions with a solar collector which only differed from the one tested first in that it was not provided with a porous layer, the temperature picture shown in Fig. 24 was obtained. As a result, 7 different temperature curves 62-68 were recorded then, which correspond to the temperatures measured with the thermocouples 41-47. Only after some considerable time was a state of equilibrium attained. Such a long period is unfavourable in that during it the solar collector does not display its maximum efficiency. For, because of the high temperatures this starting phenomenon is attended with, more heat will be lost as a result of higher radiation, conduction and convection. Such unfavourable dynamic behaviour as a rule has a particularly disadvantageous effect in climates where there are great variations daily in solar radiation. If these variations repeatedly occur and the sunny periods are shorter than the starting period of the solar collector, then its efficiency will remain low. The chance of that will, of course, be greater as the starting period of the solar collector is longer.

The working medium to be used may be varied with operating conditions. For instance, instead of hexane it is possible to use other hydrocarbons, chlorinated and/or fluorinated hydrocarbons, etc., or mixtures thereof.

In climates where interruptions in sunshine are few and far between use may be made of a differently constructed solar collector. In this alternative construction the inside surface of the plate 2 is provided with irregularities by which the area of said surface is enlarged to at least 1,5 times the surface area defined by the geometrical main dimensions of the plate without thereby causing any considerable capillary transport of the condensed working medium. In the case of a rectangular plate the "geometrical main dimensions" are to be understood here as the length and the width of the plate. Said irregularities may be obtained, for example, by subjecting the envisage side of the plate to a roughening treatment, e.g., sandblasting, hammering, etc. The irregularities here serve to spread the condensate to the maximum extent on the plate in a direction transverse to the main direction of flow defined by gravity, and further to obtain the longest possible flow path to be followed by each condensate particle.

**0033174**

AKU 1825 R

Claims

1. A solar collector comprising:
   - a closed casing from which non-condensable gases are at least substantially removed;
   - a collector thermally connected to the casing and serving to convert solar rays into heat;
   - a working medium contained in the casing, which working medium, in operation of the collector, is partly in the liquid and partly in the vapour state;
   - an evaporating region in the casing, in which region the liquid working medium can evaporate under the influence of heat emitted by the collector;
   - a condensation region in the casing, in which region the vaporous working medium can condense;
   - a passage connecting the evaporating region and the condensation region permitting the internal return of condensed working medium to the evaporating region; and
   - a heat exchanger which is in thermal contact with the condensation region for the discharge of heat of condensation, characterized in that the interior surface of the casing is at least partially provided with a layer containing distributed voids that are disposed in generally spaced relationship and serve to receive the condensed working medium.

2. A solar collector according to claim 1, characterized in that the layer displays proper thermal conductivity.

3. A solar collector according to claim 2, characterized in that the layer contains a metal powder and a binder.

4. A solar collector according to claim 3, characterized in that the metal powder contains aluminium.

5. A solar collector according to claim 3, characterized in that the metal powder contains iron.

6. A solar collector according to claim 3, 4 or 5, characterized in that the binder contains an epoxy resin.

7. A solar collector according to claim 3, 4, 5 or 6, characterized in that the binder contains an expanding agent.

8. A solar collector according to claim 3, 4, 5 or 6, characterized in that the binder contains a foam.

9. A solar collector according to claim 3, 4, 5 or 6, characterized in that the layer contains mechanically formed voids.

10. A solar collector according to claim 9, characterized in that the layer contains voids formed by needle punching.

11. A solar collector according to claim 2, characterized in that the inside of the casing is provided with a thermal-sprayed metal layer.

12. A solar collector according to claim 11, characterized in that the inside of the casing is provided with a flame sprayed metal layer.

13. A solar collector according to claim 11, characterized in that the inside of the casing is provided with an arc metal sprayed layer.

14. A solar collector according to any one of the preceding claims, characterized in that viewed in return flow direction of the condensed working medium the layer increases in thickness.

15. A solar collector according to any one of the preceding claims, characterized in that the layer consists of a number of strips that extend transverse to the return flow direction of the condensed working medium.

16. A solar collector according to claim 15, characterized in that at their lowermost sides the strips are provided with a rim to prevent the condensed working medium from flowing down to lower-positioned strips.

17. A solar collector according to any one of the preceding claims, characterizeo in that the layer is profileo.

18. A solar collector according to any one of the preceding claims, provided with a closed casing having a substantially rectangular cross-section, characterized in that the condensation region has an inwardly folded wall which forms a space partially closed off from the ambient, which space is disposed within the outer boundary of the casing but outside the internal part of the casing, and the heat exchanger is accomodated in said space and is in thermal contact with said inwardly foloed wall.

19. A solar collector according to claim 18, characterized in that the wall is formed by a gastight plate attached to the casing and the heat exchanger comprises a cooling spiral which is in thermal contact with the outside of the plate.

20. A solar collector according to claim 18, characterized in that the wall is formed by a gastight assembly of two cooling plates attached to the casing which enclose a space for a heat absorbing medium.

21. A solar collector according to claim 18, characterized in that the wall is formed by a gastight assembly of two cooling plates which are attached to the casing and the heat exchanger comprises a cooling spiral enclosed between the cooling plates.

22. A solar collector according to claim 19 or 21, characterized in that the ends of the cooling spiral project transversely through the casing via passages provided therein and at these passages the casing is sealed from the ambient.

23. A solar collector according to claim 22, characterized in that the passages are sealed by the assembly of cooling plates.

24. A solar collector according to claim 23, characterized in that between the cooling plates and on the ends of the cooling spiral there are provided supporting rings which have a relatively narrow part projecting through the passages and have one end face bearing against the inside of one of the cooling plates and the other end face, adjacent to said narrow part, bearing against the other cooling plate.

25. A solar collector according to claim 24, characterized in that on the narrow part of each supporting ring, and between the respective cooling plate and the inside of the casing there is provided a metal sleeve whose ends are welded to the cooling plate and the casing.

26. A solar collector according to any one of the claims 21 through 25, the casing of which is formed by two plates which are so profiled that the evaporating region is divided into at least two parallel channels for transporting the working medium in the vaporous and in the liquid state, characterized in that the cooling plates are provided with projections that are disposed over the channels.

27. A solar collector according to any one of the preceding claims, characterized in that the collector is formed by a sun facing part of the casing.

28. A solar collector comprising:
   - a closed casing from which non-condensable gases are at least substantially removed;
   - a collector thermally connected to the casing and serving to convert solar rays into heat;
   - a working medium contained in the casing, which working medium, in operation of the collector, is partly in the liquid and partly in the vapour state;
   - an evaporating region in the casing, in which region the liquid working medium can evaporate under the influence of heat emitted by the collector;

- a condensation region in the casing, in which region the vaporous working medium can condense;
- a passage connecting the evaporating region and the condensation region permitting the internal return of condensed working medium to the evaporating region; and
- a heat exchanger which is in thermal contact with the condensation region for the discharge of heat of condensation to a heat storage medium contained in the heat exchanger, characterized in that the inner surface of at least the casing wall opposite the casing wall, which in operation of the collector faces .the sun, is provided with irregularities which do not cause any considerable capillary transport of the condensed working medium and by which irregularities the area of said inner surface is enlarged to at least 1,5 times the surface area defined by the geometrical main dimensions of said casing wall.

## fig.1

## fig.1a

## fig.1b

## fig.1c

## fig.1d

## fig.1e

## fig.2

0033174

## fig.3

## fig.5

## fig.4

## fig.6

## fig.7

## fig.9

## fig.8

0033174

fig.13

22

fig.17

24

fig.10

XII

XIII                    XIII

15

23

fig.12

fig.14

XVI

27

XVII                    XVII

16

25

fig.16

XV                    XV

26

XVI

XI                    XI

XII

fig.11

22

fig.15

24

## fig.18

## fig.19

## fig.20

## fig.21

## fig.22

0033174

fig.23

fig.24

European Patent Office

**EUROPEAN SEARCH REPORT**

Application number

EP 81 20 0073

## DOCUMENTS CONSIDERED TO BE RELEVANT

| Category | Citation of document with indication, where appropriate, of relevant passages | Relevant to claim |
|---|---|---|
| | <u>US - A - 3 923 038</u> (CUTCHAW) <br> * Columns 3,4,5; figures 1,2,3 * <br> --- | 1,2 |
| | <u>FR - A - 2 275 739</u> (HASTWELL) <br> * Page 13, lines 17-28; figures 18 and 19 * <br> ----- | 18 |

**CLASSIFICATION OF THE APPLICATION (Int. Cl.³)**

F 24 J 3/02

**TECHNICAL FIELDS SEARCHED (Int. Cl.³)**

F 24 J

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 25-03-1981 | SMETS |

EPO Form 1503.1 06.78